# EUROPÄISCHE PATENTANMELDUNG

(11) **EP 1 671 835 A1**
(43) Veröffentlichungstag der Anmeldung: **21.06.2006**
(21) Anmeldenummer: 05450196.0
(22) Anmeldetag: 01.12.2005
(51) Int. Cl.: B60M 1/30

(54) **Stromversorgungsschiene für Elektrohängebahnen und verfahren zum Herstellen derselben**

(30) Priorität: 16.12.2004 AT 21112004
(71) Anmelder: Lechner, Alexander, A-9583 Faak am See (AT); Wotke, Andreas, A-3400 Klosterneuburg (AT)
(72) Erfinder: Lechner, Alexander, A-9583 Faak am See (AT); Wotke, Andreas, A-3400 Klosterneuburg (AT)
(74) Vertreter: Beer, Manfred

(57) **Zusammenfassung**

Eine Stromversorgungsschiene besteht aus einer Trägerschiene (1) und wenigstens einer Stromschiene (2) in Form von Metallbändern, die mit Hilfe von doppelseitig beschichteten Klebebändern (3) unmittelbar auf die Trägerschiene (1) aufgeklebt sind. Die Metallbänder werden hiefür durch Biegen und Vorspannen dem Profil der Trägerschiene (1) angepasst und im Bereich von Kurven (4) der Trägerschiene (1) vorzugsweise an der Außenseite der Trägerschiene (1) befestigt.

## Beschreibung

Die Erfindung betrifft eine Stromversorgungsschiene mit den Merkmalen des einleitenden Teils von Anspruch 1.

Die Erfindung betrifft weiters ein Verfahren zum Herstellen der eingangs genannten Stromversorgungsschiene.

Schienengeführte Fahrzeuge werden üblicherweise mit Elektroantrieben ausgerüstet. Die zum Antrieb der Fahrzeuge benötigte Energie wird für gewöhnlich über Stromschienen oder stromführende Leitungen zugeführt, die entlang der Trägerschiene angeordnet sind. Die Übertragung der elektrischen Energie von den Stromschienen oder stromführenden Leitungen auf die Elektroantriebe erfolgt in Abgriffsvorrichtungen, beispielsweise durch Schleif- oder Ringkontakte.

Solche Systeme und Stromversorgungsschienen sind für Eisenbahnen und U-Bahnen bekannt und allgemein üblich.

Für kleinere schienengeführte Fahrzeuge (Fördersysteme), die eine entsprechend kleinere Antriebsleistung haben, kann auch eine berührungslose Energieübertragung vorgesehen sein.

Für Fördersysteme und Einschienen-Hängebahnen sind Anordnungen zur berührungslosen Energieübertragung vorgeschlagen worden. Beispielsweise wird auf die EP 1 439 088 A oder die WO 03/026915 A verwiesen.

Berührungslose Systeme besitzen zwar den Vorteil, dass sie verschleißfrei arbeiten. Anderseits ist bei kleinen Leistungen die Abnützung der Abgriffsvorrichtungen, wie Schleif- oder Ringkontakte, gering.

Allen berührungslosen Systemen zur Energieübertragung ist weiters gemeinsam, dass die Energieübertragung durch ein von einem offenen Transformator gebildetes, elektromagnetisches Nahfeld erfolgt. Die Stromleitungen müssen daher entlang der Trägerschiene genau und von diesen isoliert geführt werden, um gleichmäßige geometrische Verhältnisse während der Bewegung des Fahrzeuges entlang der Schienen zu gewährleisten. Dies erfordert einen hohen konstruktiven Aufwand. Auch ist der Wirkungsgrad einer berührungslosen Energieübertragung wesentlich geringer als beispielsweise der Wirkungsgrad bei Verwendung von Schleifkontakten.

Der Erfindung liegt die Aufgabe zugrunde, eine Stromversorgungsschiene der eingangs genannten Gattung vorzuschlagen, die eine möglichst kostengünstige Versorgung von schienengebundenen Fahrzeugen mit elektrischer Energie erlaubt.

Gelöst wird diese Aufgabe erfindungsgemäß mit einer Stromversorgungsschiene, welche die Merkmale des Anspruches 1 aufweisen.

Ein besonders vorteilhaftes Verfahren zum Herstellen der erfindungsgemäßen Stromversorgungsschiene ist Gegenstand des unabhängigen Verfahrensanspruches.

Bevorzugte und vorteilhafte Ausgestaltungen der erfindungsgemäßen Stromversorgungsschiene einerseits und des Verfahrens zum Herstellen derselben anderseits sind Gegenstand der abhängigen Unteransprüche.

Die erfindungsgemäße Stromversorgungsschiene vermeidet die geschilderten Nachteile der bekannten Systeme und gewährleistet die Versorgung von Elektro-Fahrzeugen mit elekrischer Energie bei geringem konstruktiven Aufwand und gleichzeitig hohem Wirkungsgrad.

Besonders vorteilhaft ist die erfindungsgemäße Stromversorgungsschiene für kleinere Transportgeräte oder -fahrzeuge.

Vorteilhaft bei der erfindungsgemäßen Stromversorgungsschiene ist es, dass über die erfindungsgemäße Stromversorgungsschiene auch Daten übermittelt werden können, die beispielsweise zum Steuern der Fahrzeuge benötigt werden.

Bei der erfindungsgemäßen Stromversorgungsschiene ist in einer bevorzugten Ausführungsform die wenigstens eine Stromschiene ein biegbares Band aus elektrisch leitendem Werkstoff, beispielsweise Messing, Kupfer oder einer Bronzelegierung.

Dieses Band kann, dort wo erforderlich, durch Biegen (Wölben) der Außenkontur der Trägerschiene angepasst und auf dieser beispielsweise mit Hilfe elektrisch isolierender Klebefolie befestigt werden. Bei dieser Ausführungsform der erfindungsgemäßen Stromversorgungsschiene entfallen die bei herkömmlichen Systemen benötigten Halterungen der Stromschiene, die mit regelmäßigem Abstand an der Trägerschiene angebracht werden müssen.

Von erheblichem Vorteil bei der erfindungsgemäßen Stromversorgungsschiene ist es, dass die den Strom leitende Stromschiene auf der Trägerschiene oder auf einer anderen im Bereich der Trägerkonstruktion bereits vorhandene Schiene flächig und elektrisch isolierend angebracht, insbesondere aufgeklebt, werden kann.

Die elektrische Isolierung kann im Rahmen der Erfindung in einer Ausführungsform wahlweise durch den Träger der Klebefolie, durch einen isolierenden Klebstoff oder durch eine isolierende Oberflächenschicht (z.B. eine Oxidschicht) an der Stromschiene oder an der Trägerschiene gebildet sein. Zu berücksichtigen ist, dass die Isolierung der jeweiligen Betriebsspannung standhalten muss, was bei Systemen mit kleiner Leistung und niedriger Versorgungsspannung kein Problem darstellt.

Der Vorteil der erfindungsgemäßen Stromversorgungsschiene kommt in einer Ausführungsform besonders gut zur Wirkung, bei welcher die Trägerschiene ein hochtragfestes verwindungs- und biegesteifes Profil ist, das beispielsweise rohr- oder zylinderförmig ist.

Bei dieser Ausführungsform der Erfindung können die Abstände der erforderlichen Aufhängungen der Trägerschiene im wesentlichen frei gewählt werden. Die Stromschiene oder die Stromschienen selbst, die an der Trägerschiene befestigt ist, benötigen keine zusätzlichen Befestigungen.

Die Trägerschiene kann kostengünstig hergestellt und montiert werden.

Weiters erlaubt es die Erfindung, der Stromversorgungsschiene ein entsprechendes Design zu geben, ohne auf technische Anforderungen der Energieversorgung achten zu müssen.

Eine Elektrohängebahn mit zylindrischer Trägerschiene ist beispielsweise aus der AT 410 108 B oder der EP 1 299 275 A bekannt.

In einer Ausführungsform der erfindungsgemäßen Stromversorgungsschiene werden Stoßstellen der den Strom leitenden, wenigstens einen Schiene vermieden, indem die elektrisch leitenden Bänder auf Rollen aufgewickelt verwendet werden, wobei die Bänder erst nach der endgültigen Montage der Trägerschiene, insbesondere nach einem erfindungsgemäßen Herstellungsverfahren auf der Trägerschiene aufgebracht werden. Dabei können im ersten Schritt für die Stromschienen verwendete (Metall-)Bänder vor dem Aufbringen auf die Trägerschiene entsprechend der Querschnittsform (Außenform) der Trägerschiene gekrümmt werden, damit sie über ihre gesamte Breite flächig an der Außenseite der Trägerschiene anliegen. Das Biegen kann beim erfindungsgemäßen Verfahren in einer bevorzugten Ausführungsform unmittelbar vor dem Aufkleben der (Metall-)Bänder erfolgen, wobei die Stromschiene durch Halterungen bereits in unmittelbarer Nähe der Trägerschiene in der gewünschten Lage befestigt wird. Der nächste Schritt umfasst das Aufbringen des Klebstoffes (Klebebänder) auf die Trägerschiene und/oder die Stromschiene. Falls bei dem erfindungsgemäßen Verfahren ein Klebeband verwendet wird, so wird dieses bevorzugt auf die Trägerschiene aufgebracht. Die oben genannten Schritte beim Herstellen der erfindungsgemäßen Stromversorgungsschiene können auch in einen einzigen Arbeitsgang kombiniert oder in umgekehrter Reihenfolge ausgeführt werden.

Als nächster Arbeitsschritt kann bei einer Ausführungsform des erfindungsgemäßen Verfahrens so vorgegangen werden, dass die (Metall-)Bänder in Längsrichtung bis in den Bereich der plastischen Verformung gedehnt werden, um Verspannungen und Biegungen, welche durch das Aufwickeln der (Metall-)Bänder auf Rollen oder das Herstellungsverfahren der Bänder entstanden sind, beseitigt werden. Alternativ kann die Biegung durch spezielle Ausgestaltung der Biegewerkzeuge bereits verspannungsfrei ausgeführt werden.

Als letzten Schritt erfolgt in einer Ausführungsform des erfindungsgemäßen Verfahrens das Aufdrücken der wenigstens einen Stromschiene an die Trägerschiene und damit der eigentliche Verbindungsvorgang, insbesondere der Klebvorgang.

Wenn erforderlich, wird davor die Oberseite der Klebefolie durch Abziehen einer Deckfolie freigelegt und anschließend das Metallband an die Trägerschiene gedrückt und dadurch mit dieser fest verklebt.

Das erfindungsgemäße Verfahren zum Herstellen der erfindungsgemäßen Stromversorgungsschiene kann wahlweise ausgeführt werden, indem (dünne) (Metall-)Bänder als Stromschienen auf vorgefertigte Stücke der Trägerschiene aufgebracht werden.

Alternativ besteht die Möglichkeit, auf die fertige Konstruktion der Trägerschienen die (dünnen) (Metall-)Bänder anzubringen. In letzterem Fall besteht überdies die Möglichkeit, die erfindungsgemäße Stromversorgungsschiene mit einer Vorrichtung herzustellen, die (kontinuierlich) entlang der Trägerschiene bewegt wird und das (Metall-)Band oder die (Metall-)Bänder an die fertigen Trägerschienen insbesondere nach dem oben beschriebenen Verfahren aufbringt. Dabei kann vorgesehen sein, dass die einzelnen Arbeitsschritte (wie oben beschrieben) örtlich nacheinander ausgeführt werden.

Weitere Einzelheiten, Merkmale und Vorteile der erfindungsgemäßen Stromversorgungsschiene und eines bevorzugten Verfahrens zum Herstellen derselben ergeben sich aus der nachstehenden, beispielhaften Beschreibung unter Bezugnahme auf die angeschlossenen Zeichnungen, in welchen Ausführungsbeispiele gezeigt sind.

Es zeigt:
Fig. 1 schematisch und im Querschnitt eine Trägerschiene mit einer durch eine doppelseitige Klebefolie befestigten Stromschiene,
Fig. 2 schematisch und im Querschnitt eine Trägerschiene, an der zwei Stromschienen aufgeklebt sind,
Fig. 3 in Draufsicht eine Trägerschiene mit einem gekrümmten Abschnitt und an der Außenseite der Krümmung angebrachter Stromschiene,
Fig. 4a das Ende einer Stromschiene auf einem Trägerrohr mit einer ersten Ausführungsform einer Abgriffsvorrichtung,
Fig. 4b das Ende einer Stromschiene mit dem Trägerrohr sowie einer Abgriffsvorrichtung einer anderen Ausführungsform,
Fig. 5 schematisch die Schritte beim Aufbringen einer Stromschiene auf eine Trägerschiene,
Fig. 6 Rollen zum Formgeben von Stromschienen für zylinderförmige Trägerschienen und
Fig. 7 schematisch eine Vorrichtung zum Anbringen von Stromschienen auf eine Trägerschiene.

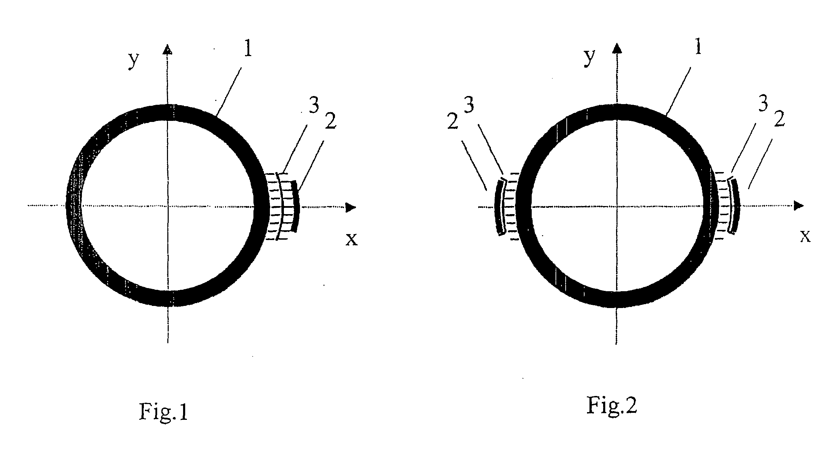

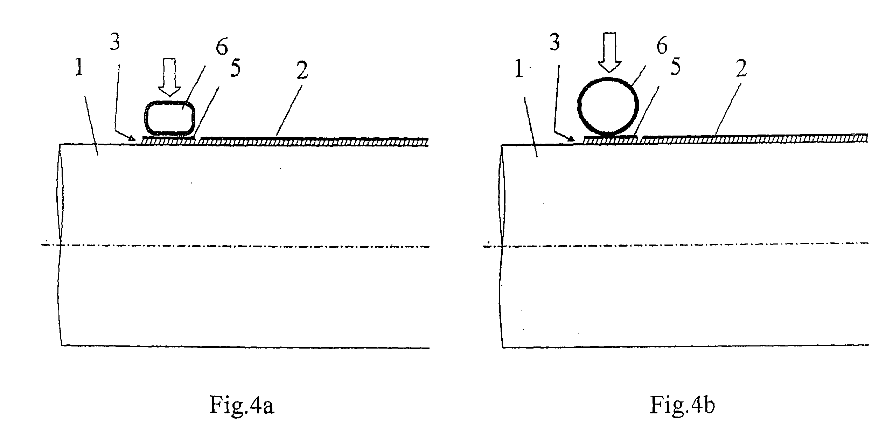

Eine in Fig. 1 im Querschnitt und schematisch gezeigte Trägerschiene 1 in Form eines zylinderförmigen Trägerrohres trägt einseitig eine Stromschiene 2 in Form eines dünnen Metallbandes, das mit Hilfe einer beidseitig beschichteten, insbesondere bandförmigen, Klebefolie 3 befestigt, nämlich aufgeklebt ist. Aus Gründen der Übersichtlichkeit ist die Dicke des Klebebandes 3 und des Metallbandes 2 in x-Richtung übertrieben groß dargestellt worden. Die Klebefolie 3 besitzt einen Träger, der als elektrische Isolierschicht dient. Das Metallband, das als Stromschiene 2 dient, wird vor dem Aufkleben entsprechend der Außenform mit der Trägerschiene 1 gebogen, so dass es über seine gesamte Breite eng (flächig) an der Trägerschiene 1 anliegt. Stromabnehmer 6 (vergleiche Fig. 4a und Fig. 4b) als Abgriffsvorrichtungen können bei der in Fig. 1 gezeigten Ausführungsform einer erfindungsgemäßen Stromversorgungsschiene rechts an der Stromschiene 2 und links unmittelbar an der Trägerschiene 1 anliegen und die Versorgungsspannung abgreifen.

Fig. 2 zeigt eine andere Ausführungsform einer erfindungsgemäßen Stromversorgungsschiene mit einer Trägerschiene 1 in Form eines zylinderförmigen Trägerrohres, auf dem so wie anhand von Fig. 1 beschrieben, jedoch beidseitig, also rechts und links, Stromschienen 2 in Form von Metallbändern aufgeklebt worden sind. Durch diese Stromschienen 2 wird die Versorgungsspannung einem entlang der Trägerschiene 1 fahrenden Fahrzeug zugeführt. Die elektrische Isolierung wird bei dieser Ausführungsform durch eine Oberflächen-Passivierung der Stromschiene 2 im Bereich der Unterseite und den Seitenflächen des Metallbandes erreicht.

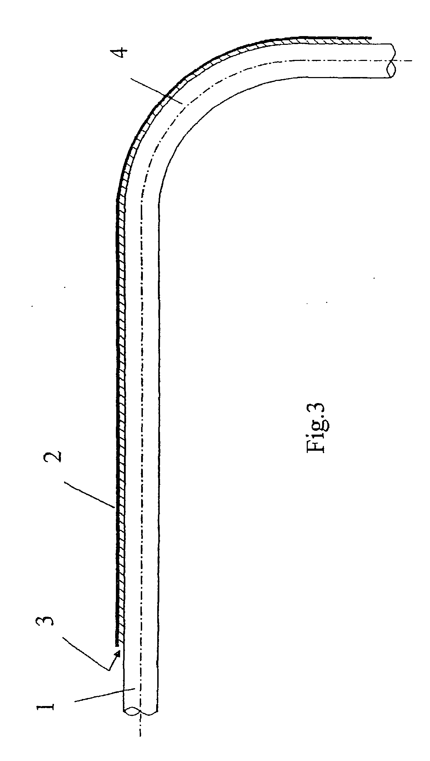

Bei der in Fig. 3 gezeigten Ausführungsform einer erfindungsgemäßen Stromversorgungsschiene ist in der Trägerschiene 1 eine Kurve 4 vorgesehen. Die Stromschiene 2 ist wenigstens im Bereich der Kurve 4 bevorzugt nur an der Außenseite der Trägerschiene 1 angebracht. Dies hat den Vorteil, dass das die Stromschiene 2 bildende Metallband beim Aufbringen sowohl in geraden als auch in gekrümmten Abschnitten der Trägerschiene 1 bei der Montage (leicht) gedehnt werden kann, um es zu glätten. So können überdies Verspannungen, z. B. aufgrund unterschiedlicher Ausdehnungs-Koeffizienten, zwischen dem die Stromschiene 2 bildenden Metallband einerseits und der Trägerschiene 1 anderseits nicht zum Ablösen der Stromschiene 2 von der Trägerschiene 1 führen. Wesentlich für das erfolgreiche Anbringen der Stromschiene 2 im Bereich von Kurven 4 bei zylinderförmigen Trägerschienen 1 ist es, dass die Stromschiene 2 in der Ebene der Kurve angeordnet wird, so dass die Stromschiene 2 ausschließlich durch Abrollen von einer Vorratsrolle ohne zusätzliches Verformen aufgrund der Kurvenkrümmung angebracht werden kann.

Die Fig. 4a und 4b zeigen das Ende einer Stromschiene 2 auf einer Trägerschiene 1 sowie mögliche Ausgestaltungen einer Abgriffsvorrichtung 6 (Stromabnehmer). An den Enden der Stromschienen 2 besteht die Gefahr, dass die Abgriffsvorrichtung 6 einen Kurzschluss zwischen der Stromschiene 2 und dem Trägerrohr 1 verursacht. Dies muss bei Verwendung von nur einer Stromschiene 2 jedenfalls ausgeschlossen werden, ist aber auch bei einer Ausführungsform mit zwei Stromschienen 2 nicht erwünscht. Um diesen Kurzschluss zu vermeiden, wird in einer bevorzugten Ausführungsform das erste Stück 5 der Stromschiene 2 vom übrigen Teil der Stromschiene 2 durch eine Unterbrechung elektrisch getrennt ausgeführt, so dass es vom übrigen Teil der Stromschiene 2 (elektrisch) getrennt ist. Die Länge des ersten, isolierten Stückes 5 der Stromschiene 2 entspricht mindestens der Länge der Abgriffsvorrichtung 6. Die Abgriffsvorrichtung 6 (Stromabnehmer) kann, wie in Fig. 4a gezeigt, als Schleifkontakt oder, wie in Fig. 4b gezeigt, als Ringkontakt ausgeführt sein. Bei Verwendung von Ringkontakten (Fig. 4b) kann das isolierte, erste Stück 5 der Stromschiene 2 kürzer ausgeführt sein als bei der Ausführungsform einer Abgriffsvorrichtung 6 als Schleifkontakt wie in Fig. 4a gezeigt. Bei dieser Ausführungsform kann die isolierte Zone 5 der Stromschiene 2 nur durch die Isolation des Klebebandes 3 ausgeführt werden.

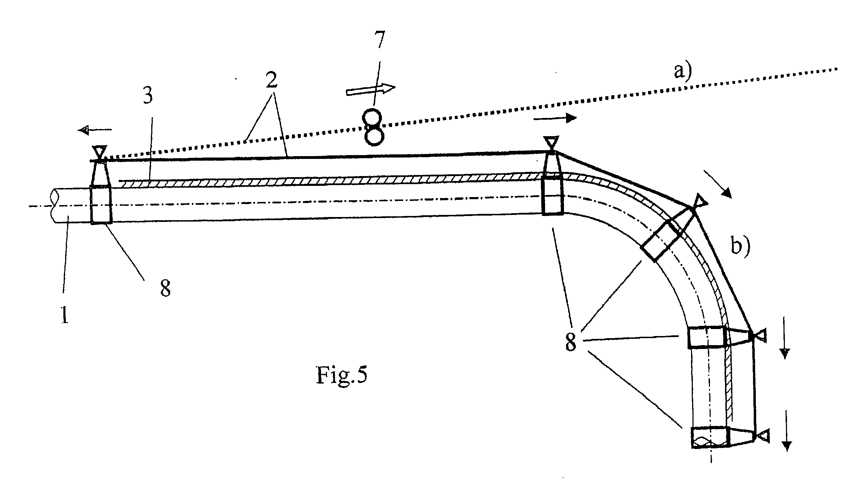

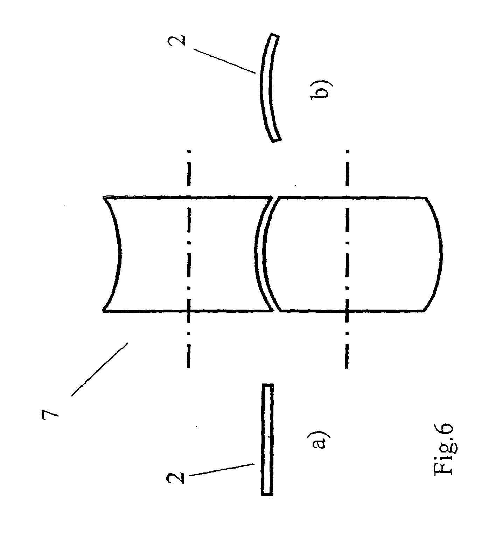

Fig. 5 zeigt schematisch das Aufbringen einer erfindungsgemäßen Stromschiene 2 auf eine Trägerschiene 1 unter Anwendung des erfindungsgemäßen Verfahrens. Dabei wird das Metallband, das die Stromschiene 2 bilden soll, entlang der Trägerschiene 1 mit einem ersten Halter 8 am Ausgangspunkt im entsprechenden Abstand und in der gewünschten Position an der Trägerschiene 1 in Lage a) befestigt. Anschließend wird das Metallband, welches die Stromschiene 2 bilden soll, entsprechend der Außenkontur der Trägerschiene 1 gekrümmt, indem ein entsprechendes Formrollenpaar 7 (vergleiche auch Fig. 6) angewendet wird. Hierauf wird das Metallband in Position b) auf weiteren Haltern 8 befestigt. Im Anschluss daran wird das Metallband in Längsrichtung gedehnt. Dann wird eine Schutzfolie von dem doppelseitigen Klebeband 3 abgezogen. Schließlich wird das Metallband zum Bilden der Stromschiene 2 an die Trägerschiene 1 aufgepresst.

Die beim Ausführen des Verfahrens, das anhand von Fig. 5 beschrieben worden ist, verwendbaren Formrollen 7 sind in Fig. 6 schematisch gezeigt. Dabei handelt es sich um eine Ausführungsform von Formrollen 7 für die Trägerschiene 1 mit zylinderförmiger Querschnittsform.

Bevorzugt ist es, wenn die Krümmung der Wirkflächen der Formrollen, die am Metallband, das die Stromschienen 2 bilden soll, angreifen, mit kleinerem Krümmungsradius ausgeführt ist als dem Radius der Krümmung der Außenfläche der Trägerschiene 1 entspricht, um die Elastizität des Metallbandes auszugleichen (Rückfedern nach dem Austritt aus den Formrollen 7). Durch Bewegen der Formrollen 7 entlang des Metallbandes kann ein ebenes Metallband (Fig. 6a) in ein in Längsrichtung gewölbtes Metallband (Fig. 6b) umgeformt werden.

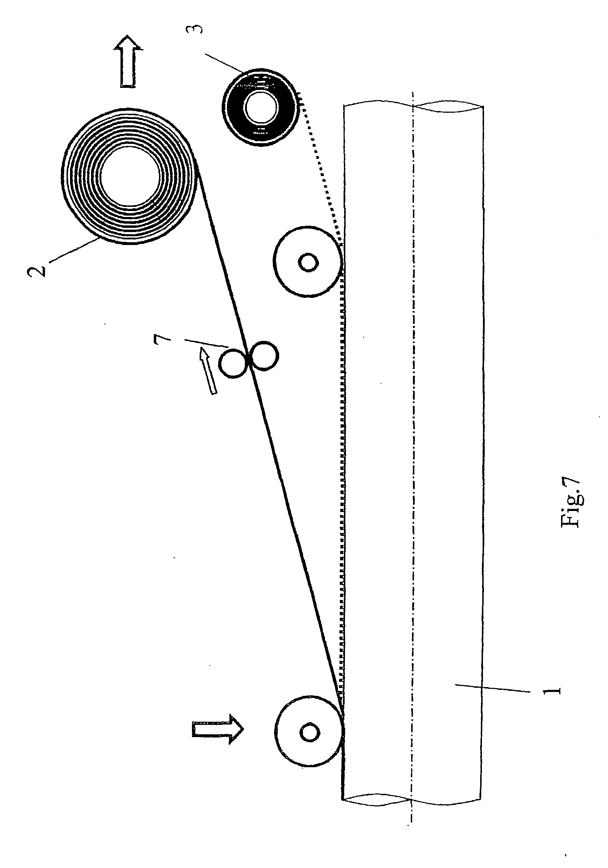

In Fig. 7 ist schematisch eine Vorrichtung gezeigt, die dazu verwendet werden kann, nach dem erfindungsgemäßen Verfahren eine Stromschiene 2 auf eine fertig installierte Trägerschiene 1 aufzubringen. Die in Fig. 7 gezeigte Vorrichtung kann entlang der Trägerschiene 1 bewegt werden und führt dabei die Arbeitsschritte des Aufbringens der Klebefolie 3, des Krümmens des Metallbandes, des Vorspannens des Metallbandes und des Aufklebens des Metallbandes auf die Trägerschiene 1 aus.

Zusammenfassend kann ein Ausführungsbeispiel der Erfindung wie folgt beschrieben werden:

Eine Stromversorgungsschiene besteht aus einer Trägerschiene 1 und wenigstens einer Stromschiene 2 in Form von Metallbändern, die mit Hilfe von doppelseitig beschichteten Klebebändern 3 unmittelbar auf die Trägerschiene 1 aufgeklebt sind. Die Metallbänder werden hiefür durch Biegen und Vorspannen dem Profil der Trägerschiene 1 angepasst und im Bereich von Kurven 4 der Trägerschiene 1 vorzugsweise an der Außenseite der Trägerschiene 1 befestigt.

## Patentansprüche

1. Stromversorgungsschiene zum Versorgen von Fahrzeugen mit elektrischer Energie, **dadurch gekennzeichnet, dass** die Stromversorgungsschiene aus einer Trägerschiene (1) und wenigstens einer Stromschiene (2) besteht, dass die Stromschiene (2) als elektrisch leitendes Band ausgeführt ist und dass das die Stromschiene (2) bildende Metallband unmittelbar an der Trägerschiene (1) befestigt ist.

2. Schiene nach Anspruch 1, **dadurch gekennzeichnet, dass** sie zum Versorgen von entlang einer Trägerschiene verfahrbaren Fahrzeugen mit elektrischer Energie dient.

3. Schiene nach Anspruch 1 oder 2, **dadurch gekennzeichnet, dass** die Fahrzeuge Fahrzeuge einer Elektrohängebahn sind.

4. Schiene nach einem der Ansprüche 1 bis 3, **dadurch gekennzeichnet, dass** das die Stromschiene (2) bildende Band ein Metallband ist.

5. Schiene nach einem der Ansprüche 1 bis 4, **dadurch gekennzeichnet, dass** das die Stromschiene (2) bildende Band durch Kleben an der Trägerschiene (1) befestigt ist.

6. Schiene nach einem der Ansprüche 1 bis 5, **dadurch gekennzeichnet, dass** das die Stromschiene (2) bildende Band mit Hilfe eines doppelt beschichteten Klebebandes (3) an der Trägerschiene (1) befestigt ist.

7. Schiene nach Anspruch 5, **dadurch gekennzeichnet, dass** das Klebeband (3) eine elektrisch isolierende Trägerschicht besitzt.

8. Schiene nach einem der Ansprüche 1 bis 7, **dadurch gekennzeichnet, dass** das die Stromschiene (2) bildende Band an der Trägerschiene (1) durch einen elektrisch isolierenden Klebstoff befestigt ist.

9. Schiene nach einem der Ansprüche 1 bis 8, **dadurch gekennzeichnet, dass** die der Trägerschiene (1) zugekehrte Seite des die Stromschiene (2) bildende Bandes oder die Trägerschiene (1) selbst insbesondere im Bereich der Verklebung eine insbesondere durch Passivieren hergestellte, elektrisch nicht leitende Schicht trägt.

10. Schiene nach einem der Ansprüche 1 bis 9, **dadurch gekennzeichnet, dass** das die Stromschiene (2) bildende Band entsprechend der Außenkontur der Trägerschiene (1) geformt, insbesondere gekrümmt ist.

11. Schiene nach einem der Ansprüche 1 bis 10, **dadurch gekennzeichnet, dass** die Stromschiene (2) im Bereich von Kurven (4) der Trägerschiene (1) an der Außenseite der Trägerschiene (1) angeordnet ist.

12. Schiene nach Anspruch 11, **dadurch gekennzeichnet, dass** die Stromschiene (2) mittig zu jener Ebene der Krümmung der Kurve (4) angeordnet ist, die durch die Mittelpunkte der kreisförmigen Querschnitte eines die Trägerschiene (1) bildenden Trägerrohres verläuft.

13. Schiene nach einem der Ansprüche 1 bis 12, **dadurch gekennzeichnet, dass** an den Enden der Stromschiene (2) ein elektrisch, vom übrigen Teil der Stromschiene (2) getrennter Abschnitt (5) der Stromschiene (2) vorgesehen ist, dessen Länge wenigstens dem Kontaktbereich einer Abgriffsvorrichtung (6) (Stromabnehmer) entspricht, vorgesehen ist.

14. Schiene nach einem der Ansprüche 1 bis 13, **dadurch gekennzeichnet, dass** als Abgriffsvorrichtung (6) ein Schleifkontakt oder ein Ringkontakt vorgesehen ist.

15. Verfahren zum Anbringen einer als elekrisch leitendes Band ausgeführten Stromschiene (2) auf eine Trägerschiene (1) in Form eines Trägerrohres, bei dem das Band vor oder unmittelbar beim Aufbringen auf die Trägerschiene (1) durch Biegen mit Hilfe von Formrollen (7) entsprechend der Außenform der Trägerschiene (1) gekrümmt wird.

16. Verfahren nach Anspruch 15, **dadurch gekennzeichnet, dass** das als Stromschiene (2) dienende Band vor dem Aufkleben in seiner Längsrichtung im Bereich der plastischen Verformung vorgespannt wird.

17. Verfahren nach Anspruch 15 oder 16, **dadurch gekennzeichnet, dass** die Stromschiene (2) auf eine fertig montierte Trägerschiene (1) mit Hilfe einer Vorrichtung aufgebracht wird, die das Aufbringen des Klebstoffes, insbesondere des Klebebandes, das Verformen des (Metall)Bandes , das Spannen oder Vorspannen des Metallbandes und das Anpressen des (Metall)Bandes kontinuierlich über die gesamte Länge der Trägerschiene (1) ausführt.

18. Verfahren nach Anspruch 17, **dadurch gekennzeichnet, dass** das Aufbringen des Klebebandes kontinuierlich ausgeführt wird.
